# EUROPEAN PATENT APPLICATION

(11) **EP 1 175 040 A1**
(43) Date of publication of application: **23.01.2002**
(21) Application number: 00202516.1
(22) Date of filing: 14.07.2000
(51) Int. Cl.: H04L 12/18

(54) **Session establishment method and related devices**

(71) Applicant: ALCATEL, 75008 Paris (FR)
(72) Inventor: van Doorselaer, Bart Alfons Peter, 9090 Melle (BE)

(57) **Abstract**

A Session establishment method and the related devices are able to establish a session between a calling user and a number of called users over at least one internet protocol link. This session is established between the calling user and a destination port of each of the called users. The destination port of each of the called users is identified by respective destination port numbers. The calling user and the called users together determine, by exchanging messages, the respective destination port numbers to have the same value.

## Description

The present invention relates to a session establishment method as described in the preamble of claim 1 and to a related session establishment device as described in the preamble of claim 8 up to claim 15.

Such a session establishment method is already known in the art, e.g. from the Internet Engineering Task Force (IETF) document "SIP: Session Initiation Protocol" with reference RFC 2543 from the authors Handley et al, published in March 1999. Therein, the Session Initiation Protocol is described, which is adapted to create, modify and terminate communication sessions between two or more participants. The participants in a multiparty conference may communicate via full mesh communication sessions, the so-called distributed conference, "initiated" by the Session Initiation Protocol. Hereto the caller invites the callee to the communication session. In the invitation the caller sends the callee the user datagram protocol port number whereon the caller wants to receive his data-packets. In reply, the callee sends the user datagram protocol port number whereon the callee wants to receive his data. Because the caller and callee independently choose a port number, both port numbers in general differ from each other. The destination UDP port numbers that a participant will use when sending packets are hence not chosen by this participant himself, but by the participant that will receive.

Xcast used as multicast protocol for carrying the data of the by the session initiation protocol established multicast communication session is especially suitable for small multicast groups. However, Xcast and the Session Initiation Protocol SIP are not compatible in that sense that the normal Xcast is only able to transport one single User Datagram Protocol port number for sending data from one sender to multiple receivers.

Besides this so called simple Xcast scheme there is an UDP enhanced scheme of Xcast solving the problem, by being adapted to transport different destination User Datagram Protocol port numbers for different receivers. However this UDP enhanced scheme of Xcast involves a larger overhead and complexity compared to the simple Xcast scheme.

An object of the present invention is to provide a session establishment method of the above known type but wherein the session establishment method is adapted to properly co-operate with the simple Xcast protocol.

According to the invention, this object is achieved by the method as described in claim 1.

Indeed by exchanging messages, the calling user together with the called users determine a destination port number for the respective calling user, that is the port number of each of the called users whereto the calling user sends his data, in such a way that these destination port numbers have the same value. In this way both parties will agree upon which destination port number the calling user will use to send the packets to. By determining the same destination port number for calling users, the session establishment method is able to co-operate with the simple Xcast protocol.

An additional characteristic feature of the present invention is achieved by the method as described in claim 2 and claim 3 and the related devices as described in claim 8, claim 9 and claim 11.

The calling user proposes a destination port number to the called users, that is the port number whereto the calling user will send his data-packets. The called parties either accept it or not. In case of acceptance, each called user adopts this port number as its destination ports, that is the port whereto the calling user has to send his data-packets, and subsequently, the called user replies this destination port number to the calling user. In this way, the destination port numbers of the respective destination ports are agreed upon by all users. In case of non-acceptance of the proposed destination port number by one or more of the called users, this called user notifies the calling user thereof. The calling user excludes the one or more called users, as described in claim 2, from the session, in order to be able to reach an agreement upon a destination port number between all other users.

In the alternative, as described in claim 3, in case of non-acceptance of the proposed destination port number by one or more of the called users, these one or more called users notify the calling user of the rejection, whereafter the calling user will restart the negotiation from the beginning by proposing a new destination port number to each of the called parties in order to reach an agreement upon a destination port number between all users.

In this way, simple Xcast can be used since every participant will be able to determine the same (i.e. identical) destination port number for all outgoing communications.

Another characteristic feature of the present invention is achieved by the method as described in claim 4 and the related device as described in claim 10.

The one or more called users notify the calling user of the rejection, together with a new proposal for a new destination port number whereafter the calling user will restart the negotiation from the beginning by proposing a new destination port number, based on the new destination port number proposed by the one or more called users that notify the calling user of the rejection.

A further characteristic feature of the present invention is achieved by the method as described in claim 5 and claim 6 and the related devices as described in claim 12, claim 13 and claim 15.

The calling user proposes to the called users a destination port number identifying the destination port of the called users, that is the port number whereto the calling user will send his data-packets and an additional destination port number identifying the destination port of the calling user, that is the port number whereto the called users will send the data-packets. The called parties either accept it or not.

If all called users accept the destination port number identifying the destination port of the called users and an additional destination port number identifying the destination port of the calling user the called users a notify the calling user thereof. In this way, the destination port numbers of the respective destination ports are agreed upon by all parties.

In the alternative, in case of rejection of the proposed destination port numbers by one or more called users, these one or more called users notify the calling user thereof. The rejecting called users are, as described in claim 5, are excluded by the calling user from the session to be able to reach an agreement upon a destination port number between all users.

In case of rejection of the proposed destination port number by one or more called users, the rejecting called users notify the calling user of the rejection, eventually together with a new proposal, whereafter the calling user, as described in claim 6, will restart said session establishment method from the beginning.

Another characteristic feature of the present invention is achieved by the method as described in claim 7 and the related device as described in claim 14.

The one or more called users notify the calling user of the rejection, together with a new proposal for one or more new destination port numbers whereafter the calling user will restart the negotiation from the beginning by proposing a new destination port numbers, based on the new destination port numbers proposed by the one or more called users that notify the calling user of the rejection.

The above and other objects and features of the invention will become more apparent and the invention itself will be best understood by referring to the following description of an embodiment taken in conjunction with the accompanying drawings wherein:
FIG. 1 represents a simple XCAST IP network; and
FIG. 2 represents the calling user CGU and one called user CDU from FIG.1; and
FIG. 3 represents the SIP call establishment flow between the calling user CGU and the first called user CDU; and

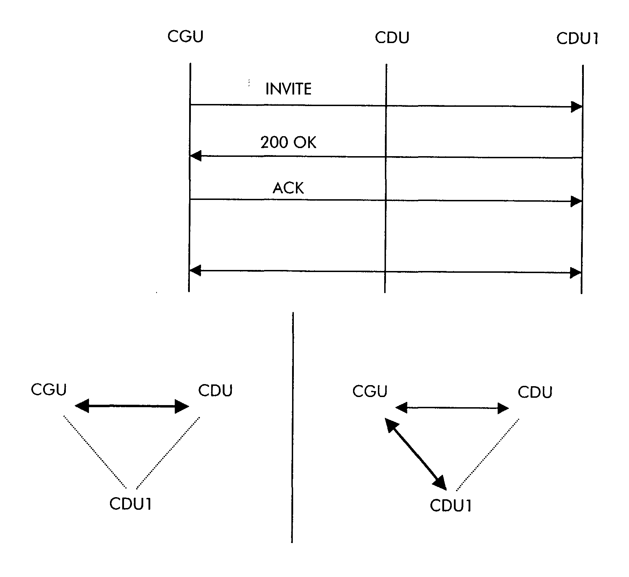

FIG. 4 represents the SIP call establishment flow between the calling user CGU and the second called user CDU1.

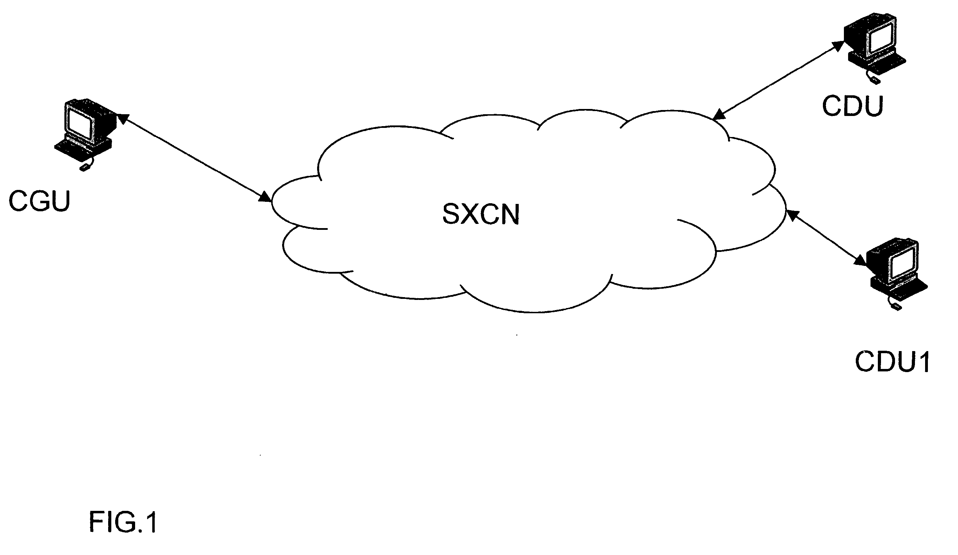

In the following paragraphs, referring to the drawings, an implementation of the method and the related devices according to the present invention will be described. In the first paragraph of this description the main elements of this network as presented in FIG. 1 are described. In the second paragraph, all connections between the before mentioned network elements and described means are defined. Subsequently all relevant functional means of the mentioned network elements are described followed by a description of all interconnections. In the succeeding paragraph the actual execution of the method for session establishment is described. Subsequently a second embodiment is dealt with in the same manner as is done with the first embodiment.

An essential element of this embodiment of the present invention is a network constituted by the simple XCAST Internet Protocol network SXCN. Further there is a number of Session Initiation Protocol compliant user-terminals, but in order to keep simplicity in this description only three user-terminals, a calling user terminal CGU, a first called user terminal CDU and a second called user terminal CDU1 are presented. All user-terminals CGU, CDU and CDU1 are chosen to be a personal computer with a belonging screen and keyboard as well as microphone and loudspeaker, but can be as well dedicated non-PC devices implementing SIP, simple Xcast and having a microphone and loudspeaker.

All user terminals are coupled to the Internet Protocol simple Extended multicast network over an internet protocol link.

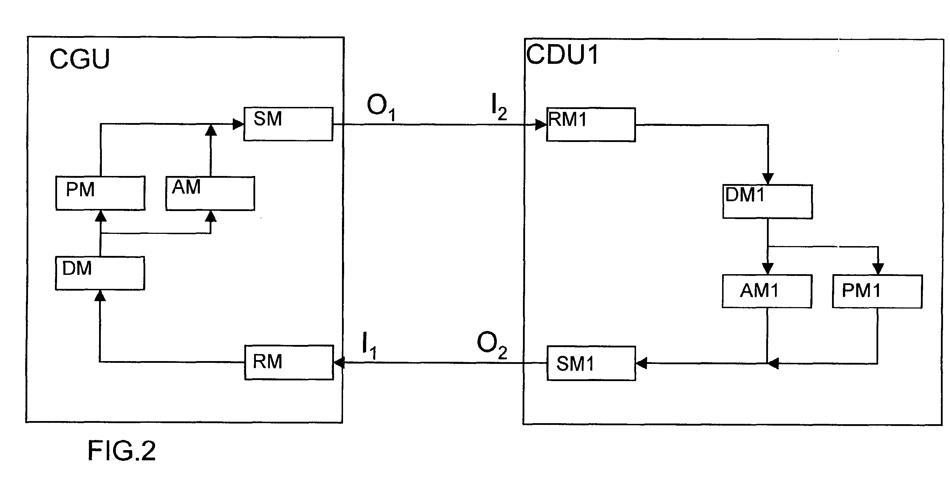

The calling user terminal CGU, as presented in FIG. 2 is built up of proposing means PM that is adapted to propose a User Datagram Protocol, further referred to as UDP, destination port number, that is the UDP port number of the called user CDU whereto the calling user will send his data. Further there is a sending means SM that is able to send the proposed UDP destination port number towards the called user CDU. Additionally there is a receiving means RM that is adapted to receive a propose of a UDP destination port number from a called user CDU, that is the UDP port number of the calling party whereto the called part proposes to send its data, a decision means DM that is able to decide if the proposed destination port number is accepted or not. The adopting means is able to adopt the proposed UDP destination number and use it as destination port number of the calling user CGU.

The receiving means RM has an input-terminal that is at the same time an input terminal I₁ of the calling user CGU. The receiving means RM further is coupled to the decision means DM, that in its turn is coupled with a first terminal to the proposing means PM and with a second terminal to the adopting means AM. Both the proposing means PM and the adopting means AM are coupled to the sending means SM. The sending means SM has an output terminal that is at the same an output terminal O₁ of the calling user CGU.

The called user CDU, as presented in FIG. 2 is built up of proposing means PM1 that is adapted to propose a User Datagram Protocol destination port number, that is the UDP port number of the called user CDU whereto the calling user will send his data. Further there is a sending means SM1 that is able to send the proposed UDP destination port number towards the called user CDU. Additionally there is a receiving means RM1 that is adapted to receive a propose of a UDP destination port number from a called user CDU, that is the UDP port number of the calling party whereto the called part proposes to send its data, a decision means DM1 that is able to decide if the proposed destination port number is accepted or not. The adopting means is able to adopt the proposed UDP destination number and use it as destination port number of the calling user CGU.

The receiving means RM1 has an input-terminal that is at the same time an input terminal I₂ of the calling user CGU. The receiving means RM1 further is coupled to the decision means DM1, that in its turn is coupled with a first terminal to the proposing means PM1 and with a second terminal to the adopting means AM.1 Both the proposing means PM1 and the adopting means AM1 are coupled to the sending means SM1. The sending means SM1 has an output terminal that is at the same an output terminal O₂ of the calling user CGU. The called user CDU1 contains the same functional structure as the called user CDU.

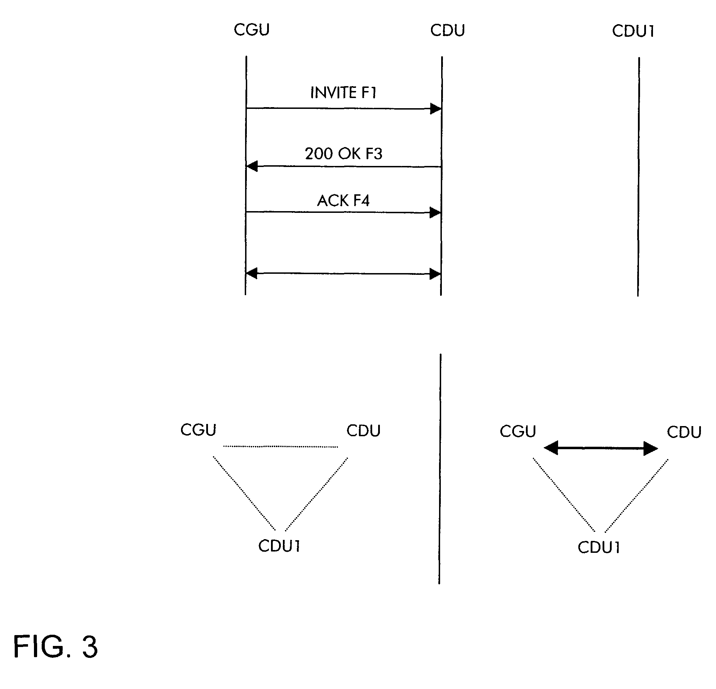

In order to explain the actual operation of the present invention it is assumed that a first user, the calling user intends to establish a communication session using the Session Initiation Protocol, further referred to as SIP, with the two called users CDU and CDU1. In order to establish the communication session the calling user at first invites the called user CDU (see FIG.3) by sending a SIP INVITE message comprising a UDP destination port number towards the calling user CDU. The receiving means RM1 of the called user CDU receives the INVITE message and determines therefrom the UDP port number whereto the calling user will send his Real Time Protocol datagrams, further referred to as RTP datagrams. The decision means DM1 determines if the proposed UDP destination port number is acceptable for using the same number to send RTP datagrams from this called user CDU towards the calling user CGU. In case the UDP destination port number is acceptable the adapting means AM1 adopts the proposed UDP destination port number as the UDP destination port number of the called user CDU. This UDP destination port number is included in a SIP 200 OK message and sent towards the calling user CGU by the sending means SM1. Subsequently the receiving means RM of the calling user CGU receives the SIP 200 OK message interprets it and decides that the first propose of proposed UDP destination port number is adopted by the called user CDU. In this way both parties have agreed on the use of the same proposed UDP destination port number for sending its RTP datagrams on. Finally an acknowledgement message ACK is sent from calling user towards the called user CDU to acknowledge the establishment of the call.

The communication session between the calling user CGU and the second called user CDU1 as well as the session between the first called user CDU and the second called user CDU1 are established in the same way as is done between the calling user CGU and the first called user CDU.

When the session between the calling user on one hand and the called users CDU, CDU1 on the other hand is established the RTP data sessions can start using the simple Xcast Internet Protocol.

In case the decision means of the called user CDU decides not to accept the proposed UDP destination port number, the proposing means subsequently proposes another UDP destination port number that subsequently is forwarded to the sending means of the called used CDU and subsequently sent using a SIP 200 OK message or alternatively a SIP error message, comprising the new, proposed UDP destination port number to the receiving means RM of the calling user CGU that forwards the message to the decision means DM that decides whether or not to accept the proposed UDP destination port number and based hereon adopts the UDP destination port number as the UDP destination port number of the called user CDU1 whereto the calling user CGU will send its RTP datagrams or propose a new UDP destination port number again to the called user CDU1. Subsequently the UDP destination port number should be renegotiated with the first called party CDU in the same way as described before but this time using the new, agreed UDP destination port number already agreed with the second called user.

Secondly, there is another embodiment of the present invention, which is executed, in the same environment as described before. Hence only the execution of this second embodiment is described in the following.

In order to explain the actual operation of the present invention it is assumed that a first user, the calling user intends to establish a communication session using the Session Initiation Protocol, further referred to as SIP, with the two called users CDU and CDU1. In order to establish the communication session the calling user at first invites the called user CDU, by sending a SIP INVITE message towards the calling user CDU. The SIP invite message contains a UDP destination port number identifying the destination port of the called users CDU and an additional destination port number identifying a destination port of the calling user CGU. The receiving means of the called user CDU receives the INVITE message and determines therefrom the UDP port number whereto the calling user will send his RTP datagrams and additionally the destination port number of the calling user CGU whereto the called user CDU has to send his datagrams. The decision means of the called user then determines if the proposed UDP destination port numbers are acceptable. In case the UDP destination port numbers are acceptable the adapting means of the called user adopts the destination port number as destination port of the called users CDU and adopts the additional destination port number as destination port of said calling user CGU. These UDP destination port numbers both are included in a SIP 200 OK message and that is sent towards the calling user CGU by the sending means of the called user. Subsequently the receiving means of the calling user CGU receives the SIP 200 OK message interprets it and decides that the first propose of proposed UDP destination port numbers is adopted. In this way both parties have agreed on the use of the same proposed UDP destination port numbers for sending its RTP datagrams on. Finally an acknowledgement message ACK is sent from calling user towards the called user CDU to acknowledge the agreement on the use of the UDP destination port number.

The communication session between the calling user CGU and the second called user CDU1 as well as the session between the first called user CDU and the second called user CDU1 are established in the same way as is done between the calling user CGU and the first called user CDU.

When the session between the calling user on one hand and the called users CDU, CDU1 on the other hand is established the RTP data sessions can start using the simple Xcast Internet Protocol.

In case the decision means of the called user CDU1 decides not to accept the proposed UDP destination port numbers, the proposing means subsequently proposes other UDP destination port numbers that subsequently are forwarded to the sending means of the called used CDU 1 and subsequently sent using a SIP 200 OK message or alternatively a SIP error message, comprising the new, proposed UDP destination port numbers to the receiving means of the calling user CGU. The receiving means of the calling user forwards the message to the decision means that decides whether or not to accept the proposed UDP destination port number and based hereon adopts the UDP destination port number as the UDP destination port number of the called user CDU1 whereto the calling user CGU will send its RTP datagrams or propose a new UDP destination port number again to the called user CDU1.

Subsequently the UDP destination port numbers should be renegotiated with the first called party CDU in the same way as described before but this time using the new, agreed UDP destination port numbers already agreed with the second called user.

It is to be remarked for the second embodiment that both proposed destination port numbers may have the same value or may have different values. The value of the by the calling user proposed destination port number whereto the called user will send its data packets may also have a "Don't care" value, that is the called user will be allowed to choose himself the destination port number whereto the called user will send its data packets.

It is also to be remarked that in case a called user rejects a proposed destination port, the rejecting called user may be excluded from the communication, which is valid for both described embodiments.

It is further to be remarked that instead of sequentially establishing the parts of the session, in these embodiments between the calling user and the first called user and subsequently between the calling user and the second called user it is also possible establish these parts of session at the same time in parallel.

Although the above embodiment of the invention has been described by means of functional blocks, their detailed realisation based on this functional description should be obvious for a person skilled in the art and is therefore not described.

While the principles of the invention have been described above in connection with specific apparatus, it is to be clearly understood that this description is made only by way of example and not as a limitation on the scope of the invention, as defined in the appended claims.

## Claims

1. Session establishment method for establishing a session between a calling user (CGU) and multiple called users (CDU, CDU1) over at least one internet protocol link between said calling user (CGU) and a destination port of each of said multiple called users (CDU, CDU1) said destination port of each of said multiple called users (CDU, CDU1) being identified using respective destination port numbers, **CHARACTERISED IN THAT** said calling user (CGU) and said multiple called users (CDU, CDU1) together determine, by exchanging messages, said respective destination port numbers to have the same value.

2. Session establishment method according to claim 1, **CHARACTERISED IN THAT** determining said respective destination port numbers to have the same value comprises the following steps:
a. said calling user (CGU) proposing to each of said multiple called users (CDU, CDU1) a destination port number identifying said destination port of each of said multiple called users (CDU, CDU1); and
b. each of said multiple called users either accepting or rejecting said destination port number;
c. in case of acceptance by each of said multiple called users (CDU, CDU1) adopting said destination port number by said calling user as identifying the destination port of each of said multiple called users (CDU, CDU1), and adopting said destination port by said multiple called users (CDU, CDU1) as identifying the destination port of said calling user (CGU), and in case of rejection by at least one of said multiple called users (CDU, CDU1), said calling user excluding said at least one of said multiple called users (CDU, CDU1) rejecting said port number, from said session.

3. Session establishment method according to claim 1, **CHARACTERISED IN THAT** determining said respective destination port numbers to have the same value comprises the following steps:
a. said calling user (CGU) proposing to each of said multiple called users (CDU, CDU1) a destination port number identifying said destination port of each of said multiple called users (CDU, CDU1); and
b. each of said multiple called users either accepting or rejecting said destination port;
c. in case of acceptance by each of said multiple called users (CDU, CDU1) adopting said destination port number by said calling user as identifying said destination port of each of said multiple called users (CDU, CDU1) and adopting said destination port by said multiple called users (CDU, CDU1) as identifying a destination port of said calling user (CGU), and in case of rejection by at least one of said multiple called users (CDU, CDU1), said calling user restarting said session establishment method from step a.

4. Session establishment method according to claim 3, **CHARACTERISED IN THAT** in case of rejection, said at least one of said multiple called users (CDU, CDU1) sends a proposed destination port number to said calling user and that said calling user restarts said method using said proposed destination port number.

5. Session establishment method according to claim 1, **CHARACTERISED IN THAT** determining said respective destination port numbers to have the same value comprises the following steps:
a. said calling user (CGU) proposing to each of said multiple called users (CDU, CDU1) a destination port number identifying said destination port of each of said multiple called users (CDU, CDU1) and an additional destination port number identifying a destination port of said calling user (CGU);
b. each of said multiple called users (CDU, CDU1) either accepting or rejecting said destination port number and said additional destination port number; and
c. in case of acceptance, by each of said multiple called users (CDU, CDU1) adopting said destination port number by said calling user (CGU) as identifying said destination port of each of said multiple called users (CDU, CDU1) and adopting said additional destination port number by said multiple called users (CDU, CDU1) as identifying said destination port of said calling user (CGU), and in case of rejection by at least one of said multiple called users (CDU, CDU1), said calling user excluding said at least one of said multiple called users (CDU, CDU1) rejecting said port number, from said session.

6. Session establishment method according to claim 1, **CHARACTERISED IN THAT** determining said respective destination port numbers to have the same value comprises the following steps:
a. said calling user (CGU) proposing to each of said multiple called users (CDU, CDU1) a destination port number identifying said destination port of each of said multiple called users (CDU, CDU1) and an additional destination port number identifying a destination port of said calling user (CGU);
b. each of said multiple called users (CDU, CDU1) either accepting or rejecting said destination port number and said additional destination port number; and
c. in case of acceptance, by each of said multiple called users (CDU, CDU1) adopting said destination port number by said calling user (CGU) as identifying said destination port of each of said multiple called users (CDU, CDU1) and adopting said additional destination port number by said multiple called users (CDU, CDU1) as identifying said destination port of said calling user (CGU), and in case of rejection by at least one of said multiple called users (CDU, CDU1), said calling user restarting said session establishment method from step a.

7. Session establishment method according to claim 6, **CHARACTERISED IN THAT** in case of rejection, said at least one of said multiple called users (CDU, CDU1) sends at least one proposed destination port number to said calling user and said calling user restarts said method using said at least one proposed destination port number.

8. Session establishment device to be included in a calling user, said session establishment device being adapted to establish a session between said calling user (CGU) and multiple called users (CDU, CDU1) over at least one internet protocol link between said calling user (CGU) and a destination port of each of said multiple called users (CDU, CDU1) said destination port of each of said multiple called users (CDU, CDU1) being identified using respective destination port numbers, **CHARACTERISED IN THAT** said session establishment device includes the following parts to establish said session according to the method of claim 3:
a. a proposing part, adapted to propose to each of said multiple called users (CDU, CDU1) a destination port number identifying said destination port of each of said multiple called users (CDU, CDU1);
b. a decision part, adapted to interpret an acceptance or rejection of said destination port number by said multiple called users (CDU, CDU1) and in case of rejection to reactivate said proposing means in order to propose an alternative destination port number;
c. an adopting part, adapted to adopt, in case of acceptance, said destination port number by said calling user as identifying said destination port of each of said multiple called users (CDU, CDU1) and adopting said destination port number as identifying said destination port of said calling user (CGU), for said multiple called users (CDU, CDU1).

9. Session establishment device to be included in a calling user, said session establishment device being adapted to establish a session between said calling user (COU) and multiple called users (CDU, CDU1) over at least one internet protocol link between said calling user (CGU) and a destination port of each of said multiple called users (CDU, CDU1) said destination port of each of said multiple called users (CDU, CDU1) being identified using respective destination port numbers, **CHARACTERISED IN THAT** said session establishment device includes the following parts to establish said session according to the method of claim 2:
a. a proposing part, adapted to propose to each of said multiple called users (CDU, CDU1) a destination port number identifying said destination port of each of said multiple called users (CDU, CDU1);
b. a decision part, adapted to interpret an acceptance or rejection of said destination port number by said multiple called users (CDU, CDU1) and in case of rejection adapted to exclude said at least one of said multiple called users (CDU, CDU1) rejecting said port number, from said session;
c. an adopting part, adapted to adopt, in case of acceptance, said destination port number by said calling user as identifying said destination port of each of said multiple called users (CDU, CDU1) and adopting said destination port number as identifying said destination port of said calling user (CGU), for said multiple called users (CDU, CDU1).

10. Session establishment device to be included in a called user, said session establishment device being adapted to establish a session between a calling user (CGU) and multiple of said called users (CDU, CDU1) over at least one internet protocol link between said calling user (CGU) and a destination port of each of said multiple called users (CDU, CDU1) said destination port of each of said multiple called users (CDU, CDU1) being identified using respective destination port numbers, **CHARACTERISED IN THAT** said session establishment device includes the following parts to establish a session according to the method of claim 2 or claim 3:
a. a decision part, adapted to accept or reject a proposal sent to said called user by said calling user (CGU) and containing a destination port number identifying said destination port of each of said multiple called users (CDU, CDU1);
b. an adopting part, adapted to adopt said destination port number as identifying said destination port, of said called user for said calling user and as identifying a destination port of said called user for said calling user (CGU), in case of acceptance of said proposal by said called user and adapted to notify said calling user thereof; and
c. a proposing part, adapted to propose to said calling user (CGU) another destination port number identifying said destination port of each of said multiple called users (CDU, CDU1) in case of rejection of said proposal.

11. Session establishment device to be included in a called user, said session establishment device being adapted to establish a session between a calling user (CGU) and multiple of said called users (CDU, CDU1) over at least one internet protocol link between said calling user (CGU) and a destination port of each of said multiple called users (CDU, CDU1) said destination port of each of said multiple called users (CDU, CDU1) being identified using respective destination port numbers, **CHARACTERISED IN THAT** said session establishment device includes the following parts to establish a session according to the method of claim 2 or claim 3:
a. a decision part, adapted to accept or reject a proposal sent to said called user by said calling user (CGU) and containing a destination port number identifying said destination port of each of said multiple called users (CDU, CDU1);
b. an adopting part, adapted to adopt said destination port number as identifying said destination port, of said called user for said calling user and as identifying a destination port of said called user for said calling user (CGU), in case of acceptance of said proposal by said called user and adapted to notify said calling user thereof; and
c. a notifying part, adapted to notify said calling user (CGU) of rejection of said proposal in case of rejection of said proposal.

12. Session establishment device to be included in a calling user, said session establishment device being adapted to establish a session between said calling user (CGU) and multiple called users (CDU, CDU1) over at least one internet protocol link between said calling user (CGU) and a destination port of each of said multiple called users (CDU, CDU1) said destination port of each of said multiple called users (CDU, CDU1) being identified using respective destination port numbers, **CHARACTERISED IN THAT** said session establishment device includes the following parts to establish said session according to the method of claim 6:
a. a proposing part, adapted to propose to each of said multiple called users (CDU, CDU1) a destination port number identifying said destination port of each of said multiple called users (CDU, CDU1) and an additional destination port number identifying a destination port of said calling user (CGU);
b. a decision part, adapted to interpret an acceptance or rejection of said destination port number and said additional destination port number by said multiple called users (CDU, CDU1) and in case of rejection to reactivate said proposing means in order to propose alternative destination port numbers;
c. an adopting part, adapted to adopt, in case of acceptance, said destination port number by said calling user as identifying said destination port of each of said multiple called users (CDU, CDU1) and adopting said additional destination port number as identifying said destination port of said calling user (CGU), for said multiple called users.

13. Session establishment device to be included in a calling user, said session establishment device being adapted to establish a session between said calling user (COU) and multiple called users (CDU, CDU1) over at least one internet protocol link between said calling user (CGU) and a destination port of each of said multiple called users (CDU, CDU1) said destination port of each of said multiple called users (CDU, CDU1) being identified using respective destination port numbers, **CHARACTERISED IN THAT** said session establishment device includes the following parts to establish said session according to the method of claim 5:
a. a proposing part, adapted to propose to each of said multiple called users (CDU, CDU1) a destination port number identifying said destination port of each of said multiple called users (CDU, CDU1) and an additional destination port number identifying a destination port of said calling user (CGU);
b. a decision part, adapted to interpret an acceptance or rejection of said destination port number and said additional destination port number by said multiple called users (CDU, CDU1) and in case of rejection adapted to exclude said at least one of said multiple called users (CDU, CDU1) rejecting said port number, from said session;
c. an adopting part, adapted to adopt, in case of acceptance, said destination port number by said calling user as identifying said destination port of each of said multiple called users (CDU, CDU1) and adopting said additional destination port number as identifying said destination port of said calling user (CGU), for said multiple called users.

14. Session establishment device to be included in a called user, said session establishment device being adapted to establish a session between a calling user (CGU) and multiple of said called users (CDU, CDU1) over at least one internet protocol link between said calling user (CGU) and a destination port of each of said multiple called users (CDU, CDU1) said destination port of each of said multiple called users (CDU, CDU1) being identified using respective destination port numbers, **CHARACTERISED IN THAT** said session establishment device includes the following parts to establish a session according to the method of claim 5 or claim 6:
a. a decision part, adapted to accept or reject a proposal sent to said called user by said calling user (CGU) and containing a destination port number identifying said destination port of each of said multiple called users (CDU, CDU1) and an additional destination port number identifying a destination port of said calling user (CGU);
b. an adopting part, adapted to adopt said destination port number as identifying said destination port of said called user for said calling user and to adopt said additional port number as identifying said destination port of said calling user for said called user, in case of acceptance of said proposal by said called users and adapted to notify said calling user thereof; and
c. a proposing part, adapted to propose to said calling user (CGU) another destination port number identifying said destination port of each of said multiple called users (CDU, CDU1) and an additional destination port number identifying a destination port of said calling user (CGU) in case of rejection of said proposal.

15. Session establishment device to be included in a called user, said session establishment device being adapted to establish a session between a calling user (CGU) and multiple of said called users (CDU, CDU1) over at least one internet protocol link between said calling user (CGU) and a destination port of each of said multiple called users (CDU, CDU1) said destination port of each of said multiple called users (CDU, CDU1) being identified using respective destination port numbers, **CHARACTERISED IN THAT** said session establishment device includes the following parts to establish a session according to the method of claim 5 or claim 6:
a. a decision part, adapted to accept or reject a proposal sent to said called user by said calling user (CGU) and containing a destination port number identifying said destination port of each of said multiple called users (CDU, CDU1) and an additional destination port number identifying a destination port of said calling user (CGU);
b. an adopting part, adapted to adopt said destination port number as identifying said destination port of said called user for said calling user and to adopt said additional port number as identifying said destination port of said calling user for said called user, in case of acceptance of said proposal by said called users and adapted to notify said calling user thereof; and
c. a notifying part, adapted to notify said calling user (CGU) of rejection of said proposal in case of rejection of said proposal.
